(19) Europäisches Patentamt
European Patent Office
Office européen des brevets

(11) **EP 2 515 599 A1**

(12) **EUROPEAN PATENT APPLICATION**
published in accordance with Art. 153(4) EPC

(43) Date of publication:
**24.10.2012 Bulletin 2012/43**

(51) Int Cl.:
***H04W 72/08*** (2009.01)

(21) Application number: **10836955.4**

(22) Date of filing: **23.06.2010**

(86) International application number:
**PCT/CN2010/074346**

(87) International publication number:
**WO 2011/072518 (23.06.2011 Gazette 2011/25)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **15.12.2009 CN 200910259268**

(71) Applicant: **ZTE Corporation
Shenzhen, Guangdong 518057 (CN)**

(72) Inventors:
• **ZHANG, Qinghong
Guangdong 518057 (CN)**
• **WANG, Yanwen
Guangdong 518057 (CN)**

(74) Representative: **Jansen, Cornelis Marinus et al
VEREENIGDE
Johan de Wittlaan 7
2517 JR Den Haag (NL)**

(54) **METHOD AND SYSTEM FOR RESOURCE ALLOCATION**

(57) A method and a system for resource allocation are disclosed in the present invention. The method comprises: a network side, according to a preset interference threshold of neighboring cells, determining a transmission power of a cell user on a unit Resource Block (RB), and then determining to obtain the maximum number of RBs which can be allocated to the cell user according to the transmission power of the cell user on the unit RB; the network side, according to the link quality, the path loss condition and the transmission power of the cell user on the unit RB, obtaining a predicted value of the Signal Interface Noise Ratio (SINR) of the received signal, and then obtaining the current Modulation Code Scheme (MCS) of the cell user according to the predicted value of the SINR; and the network side determining a power control parameter according to the transmission power of the cell user on the unit RB and the current MCS of the cell user. In the present invention, the RB allocation, the power control parameter and the Automatic Modulation Code (AMC) work together to reach the maximum throughput of the system, thus guaranteeing the maximum theoretic spectral efficiency.

Fig.1

**Description**

Field of the Invention

The present invention relates to the wireless communication field, and in particular to a method and a system for resource allocation.

Background of the Invention

In the Long-Term Evolution (LTE) system, in the process of data transfer, the uplink or downlink time-frequency domain physical resources form Resource Blocks (RB) which are used as the unit of physical resources to be scheduled and allocated. In the case of normal Cyclic Prefix (CP), an RB contains 12 continuous sub-carriers in a frequency domain and 7 continuous Orthogonal Frequency Division Multiplexing (OFDM) symbols in a time domain, namely, the frequency domain width is 180 kHz and the time length is 0.5ms.

In the LTE uplink resources allocation, the uplink scheduler of the base station (eNodeB) is required to allocate a certain quantity of RBs and the transmission power for the user, and select appropriate Modulation Code Scheme (MCS). The relations among the number of RBs, the transmission power allocated to the user and the MCS are as follows:

the more the RBs are, the greater the required transmission power is, and the maximum transmission power of the user is a limited value;

the greater the transmission power is, the stronger the interference with the neighboring cell is, and the increase of system interference will affect the communication quality of the wireless communication system;

the higher the MCS is, the higher the spectral efficiency of the system is, which however induces the lower the transmission reliability and the worse anti-interference capacity.

In the LTE uplink, if the relations among the RB allocation, the power control parameters and the MCS selection are improperly handled, the system performance of the wireless communication system will inevitably be affected.

**Summary of the Invention**

The technical problem to be solved in the present invention is to provide a method and a system for resource allocation, which solves the problem of system performance decline caused by the improper coordination of the uplink RB allocation, the power control parameters and the Automatic Modulation Code (AMC) in the system.

To solve the above problem, a method for resource allocation is provided in the present invention, comprising:

a network side, according to a preset interference threshold of neighboring cells, determining a transmission power of a cell user on a unit Resource Block (RB), and then determining to obtain the maximum number of the RBs which can be allocated to the cell user according to the transmission power of the cell user on the unit RB; the network side, according to the link quality, the path loss condition and the transmission power of the cell user on the unit RB, obtaining a predicted value of the Signal Interface Noise Ratio (SINR) of the received signal, and then obtaining the current Modulation Code Scheme (MCS) of the cell user according to the predicted value of the SINR; and the network side determining a power control parameter according to the transmission power of the cell user on the unit RB and the current MCS of the cell user.

Furthermore, the step of the network side determining the transmission power of the cell user on the unit RB according to the preset interference threshold of neighboring cells comprises: the network side obtaining the maximum transmission power of a cell on a unit RB under the interference threshold of neighboring cells according to the preset interference threshold of neighboring cells, and then selecting the minimum value from the maximum transmission power of the cell on the unit RB, the power required to provide the highest MCS and the maximum transmission power of the cell user, as the transmission power of the cell user on the unit RB.

Furthermore, the step of the network side determining the power control parameter according to the transmission power of the cell user on the unit RB and the current MCS of the cell user comprises: the network side determining the power control parameter according to the obtained transmission power of the cell user on the unit RB, the current MCS of the cell user, a path loss and a high layer configuration parameter.

Furthermore, after the network side obtains the predicted value of the SINR, the method further comprises: the network side correcting a table of corresponding relation between the MCS and the SINR according to the statistics of block error rate.

Furthermore, the step of the network side obtaining the current MCS of the cell user according to the predicted value of the SINR comprises: the network side querying the table of corresponding relation between the MCS and the SINR to obtain the current MCS of the cell user by using the obtained predicted value of the SINR as the basis of the Automatic Modulation Code (AMC).

A system for resource allocation is also provided in the present invention, comprising: a module for determining the transmission power of a cell user on a unit RB, a module for determining the upper limit of the number of the RBs allocated to the cell user, an AMC module and a module for determining a power control parameter, wherein the module for determining the transmission power of a cell user on a unit RB is configured to determine a transmission power of a cell user on a unit RB according to a preset interference threshold of neighboring cells, and then to send the transmission power to the module for determining the upper limit of the number of the RBs allocated to the user, the module for determining a power control parameter and the AMC module; the module for determining the upper limit of the number of the RBs allocated to the user is configured to obtain the maximum number of the RBs which can be allocated to the cell user according to the determined transmission power of the cell user on the unit RB; the AMC module is configured to obtain a predicted value of the SINR of the received signal according to the link quality, the path loss condition and the transmission power of the cell user on the unit RB, and then to obtain the current MCS of the cell user according to the predicted value of the SINR and send the current MCS to the module for determining a power control parameter; and the module for determining a power control parameter is configured to determine a power control parameter according to the transmission power of the cell user on the unit RB and the current MCS of the cell user.

Furthermore, the system further comprises: an initialization module configured to set initial variables, wherein the initial variables include at least one of the following: the interference threshold of neighboring cells, a table of corresponding relation between the MCS and the SINR, and a high layer configuration parameter.

Furthermore, the module for determining the transmission power of a user on a unit RB is further configured to obtain the maximum transmission power of a cell on a unit RB under the interference threshold of neighboring cells according to the preset interference threshold of neighboring cells, and then to select the minimum value among the maximum transmission power of the cell on the unit RB, the power required to provided the highest MCS and the maximum power of the user, as the transmission power of the cell user on the unit RB.

Furthermore, the AMC module is further configured to correct the table of corresponding relation between the MCS and the SINR according to the statistics results of block error rate, and then to query the table of corresponding relation between the MCS and the SINR to obtain the current MCS of the cell user according to the obtained predicted value of the SINR of the received signal.

Furthermore, the module for determining a power control parameter is further configured to determine a power control parameter according to the transmission power of the cell user on the unit RB, the current MCS of the cell user, a path loss and the high layer configuration parameter.

Compared to the conventional art, the present invention, by coordinating the relations among the RB allocation, the AMC and the power control parameter, ensures that each user can control the theoretic interference level of neighboring cells, and guarantees the maximum theoretic spectral efficiency under the theoretic interference level, thus enabling the RB allocation, the power control parameter and the AMC to be combined and work together to maximize the system throughput.

## Brief Description of the Drawings

Fig. 1 is the flowchart of the method for resource allocation according to the embodiment of the present invention;

Fig. 2 is the schematic diagram of the structure of the system for allocating channel resource according to the preferred embodiment of the present invention;

Fig. 3 is the flowchart of the method for resource allocation according to Example 1 of the present invention;

Fig. 4 is the flowchart of the method for resource allocation according to Example 2 of the present invention; and

Fig. 5 is the schematic diagram of the interference control of neighboring cells in two cells network.

## Detailed Description of the Embodiments

The present invention is further detailed by means of the embodiments in combination with the drawings as below.

The method and the system according to the embodiments of the present invention is not limited to be applied in the LTE system, and can be also applied in the LTE-Advanced system and the Worldwide Interoperability for Microwave Access (WIMAX) system. That is to say, the method and the system according to the embodiments of the present invention can be applied in any system as long as the system is advanced with respect to the LTE system or similar thereto.

The main concept of the embodiments of the present invention is: a network side, according to a preset interference threshold of neighboring cells, determines a transmission power of a cell user on a unit RB, obtains the number of the RBs by a power factor to assist completing the basic RB allocation function, further obtains a predicted value of the received SINR of the network side according to the link quality and the path loss condition, and then obtains the current MCS of the user according to the predicted result of the SINR, and finally determines the undetermined power control parameter according to the transmission power of the user on the unit RB and the current MCS of the user.

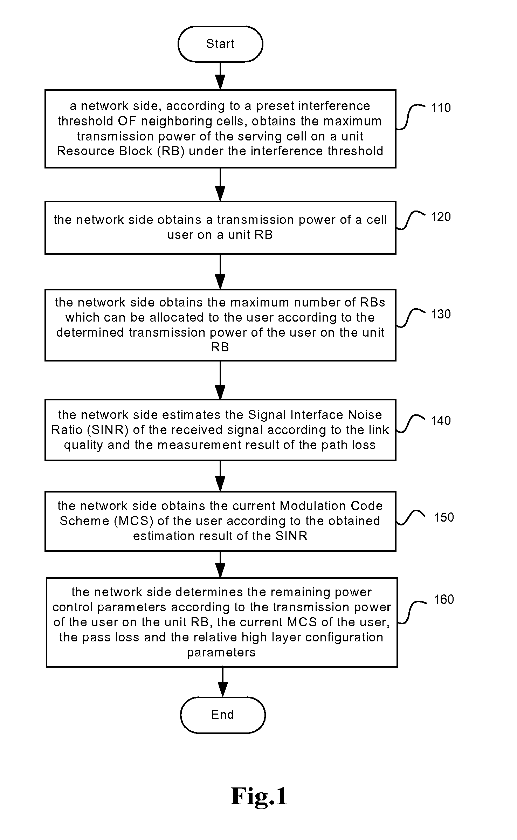

As shown in Fig. 1, the method for resource allocation according to the embodiment of the present invention comprises the following steps.

Step 110, a network side (which may be eNodeB), according to a preset interference threshold of neighboring cells, obtains the maximum transmission power of the serving cell on a unit RB under the interference threshold, referred to as $P_{MAXfromInterference}$.

Step 120, the network side obtains a transmission power of a cell user on a unit RB.

Assumed that the maximum transmission power of the user is $P_{cMAX}$ the transmission power required to meet the highest rank MCS is $P_{highestMCS}$ and the transmission power of the user on the unit RB is $P_{perRB}$, then $P_{perRB}$ can be obtained by the following formula:

$$P_{perRB} = \min\ (\ P_{cMAX}\ ,\quad P_{highestMCS}\ ,\quad P_{MAXfromInterference}\ )\ .$$

Step 130, the network side obtains the maximum number $N_{RB\_MAX}$ of RBs which can be allocated to the user, according to the condition that the transmission power of the user on the unit RB is $P_{perRB}$, wherein the power value herein is linear value, namely,

$$N_{RB\_MAX} = \left\lfloor \frac{P_{cMAX}}{P_{perRB}} \right\rfloor .$$

Step 140, the network side estimates the SINR of the received signal according to the link quality and the measurement result of path loss, referred to as $SINR_{Estimate}$.

Assumed that the interference power on a unit RB is $P_{Inteiference}$, the noise power is $P_{Noise}$ and the path loss is $PL$, $SINR_{Estimate}$ can be obtained by the following formula:

$$SINR_{Estimate} = \frac{P_{perRB} - PL}{P_{Interference} + P_{Noise}} .$$

Step 150, the network side obtains the current MCS of the user according to the obtained estimate result of the SINR.

Step 160, the network side determines the remaining power control (referred to as PC) parameters according to the transmission power of the user on the unit RB, the current MCS of the user, the PL and the relative high layer configuration parameters, and then performs the channel resource allocation.

In the R8 of the LTE protocol, the remaining power control parameter is $f\ (i)$, wherein i refers to the sub-frame number, and

$$f(i) = P_{\text{perRB}}(i) - (P_{\text{O\_PUSCH}}(i) + \alpha \cdot PL + \Delta_{\text{TF}}(i)) .$$

In the above formula, $P_{O\_PUSCH}$ (i) and $\alpha$ have high layer configuration,

$$\Delta_{\text{TF}}(i) = \begin{cases} 10\log_{10}((2^{MPR \cdot K_S} - 1)\beta_{offset}^{PUSCH}), & \text{if } Ks = 1.25 \\ 0, & \text{if } Ks = 0 \end{cases}, \text{ wherein } \beta_{offset}^{PUSCH} \text{ and } K_S \text{ have high}$$

layer configuration, and

*MPR* is the number of the information bits carried on the unit Resource Element (RE), which is determined by the MCS.

It shall be noted that, the above MCS is determined by the AMC.

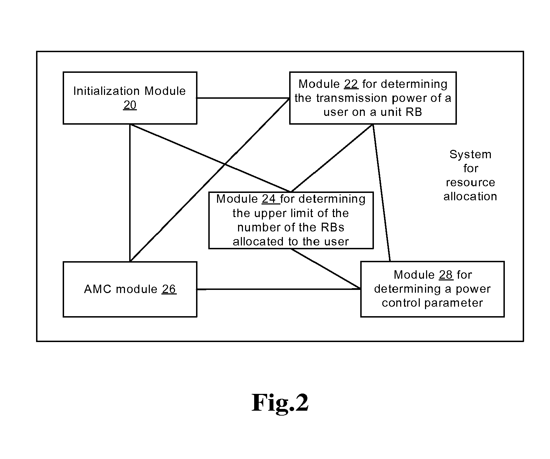

Fig. 2 is the schematic diagram of the structure of the system for allocating channel resource according to the preferred embodiment of the present invention. As shown in Fig. 2, the system for resource allocation according to the preferred embodiment of the present invention, which is used to allocate channel resources and comprises an initialization module 20, a module 22 for determining the transmission power of a user on a unit RB, a module 24 for determining the upper limit of the number of the RBs allocated to the user, an AMC module 26 and a module 28 for determining a power control parameter. These modules will be described in detail hereinafter.

The initialization module 20 is configured to set initial variables, wherein the initial variables include the interference threshold of neighboring cells, a table of corresponding relation between MCS and SINR, and high layer configuration parameters, etc.

The module 22 for determining the transmission power of a user on a unit RB is configured to determine a transmission power of a cell user on a unit RB according to a preset interference threshold of neighboring cells, and to send the transmission power to the AMC module 26 and the module 28 for determining a power control parameter.

In practice, the module 22 for determining the transmission power of a user on a unit RB can also be configured to obtain the maximum transmission power of a cell on a unit RB according to the preset interference threshold of neighboring cells, and then to select the minimum value from the maximum transmission power of the cell on the unit RB, the power required to provided the highest MCS and the maximum power of the user as the transmission power of the cell user on the unit RB, referred to as $P_{perRB}$.

The module 24 for determining the upper limit of the number of the RBs allocated to the user is configured to determine the transmission power $P_{perRB}$ of the user on the unit RB and the maximum transmission power $P_{cMAX}$ of the user according to the module 22 for determining the transmission power of a user on a unit RB, and to obtain the upper limit of the number of the RBs which can be allocated to the UE according to the following relation:

$$N_{RB\_MAX} = \left\lfloor \frac{P_{cMAX}}{P_{perRB}} \right\rfloor .$$

The AMC module 26 is configured to, after obtaining a predicted value of the SINR of the received signal according to the link quality and the path loss condition, correct the table of corresponding relation between the MCS and the SINR according to the statistics results of the Block Error Rate (BLER), and then to obtain the current MCS of the user according to the predicted value of the SINR.

In practice, the AMC module 26 estimates the predicted value $SINR_{Estimate}$ of the SINR according to the transmission power $P_{perRB}$ of the user on the unit RB and the measurement result of path loss, wherein

$$SINR_{Estimate} = \frac{P_{perRB} - PL}{P_{interference} + P_{Noise}}, \text{ in which } P_{Interference}, P_{Noise} \text{ and PL refer to the interference power, the noise power}$$

and the path loss respectively.

Preferably, the AMC module 26 is also configured to query the table of corresponding relation between SINR and MCS to obtain the current MCS of the user according to $SINR_{Estimate}$.

The module 28 for determining a power control parameter is configured to determine a power control parameter according to the transmission power of the user on the unit RB and the current MCS of the user.

Preferably, the module 28 for determining a power control parameter is also configured to determine the power control parameter according to the transmission power of the user on the unit RB, the current MCS of the user, the path loss and the high layer configuration parameters.

The present invention will be further illustrated hereinafter in conjunction with the embodiments.

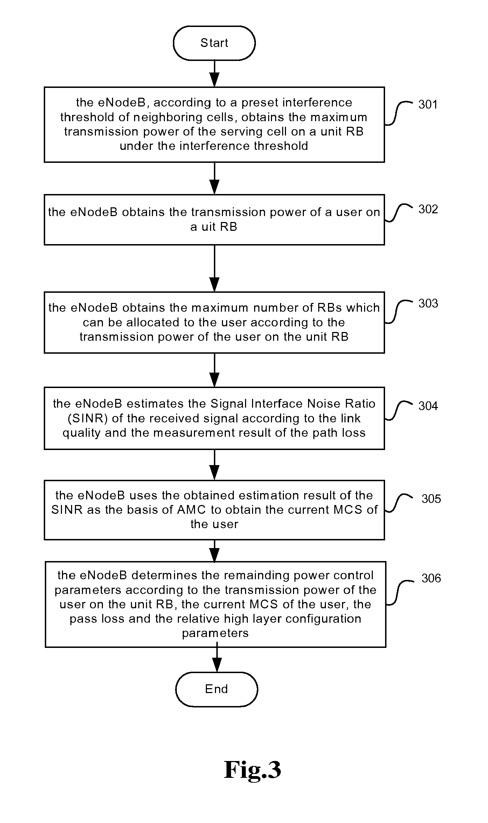

A method for coordinating the uplink RB allocation, the AMC and the power control parameter is provided in Example 1. As shown in Fig. 3, the method comprises the following steps.

Step 301, the eNodeB, according to a preset interference threshold of neighboring cells, obtains the maximum transmission power of the serving cell on a unit RB under the interference threshold, referred to as $P_{MAX}from_{Interference}$.

Assumed that the signal transmission power of the user is $P$, the path loss when arriving at the serving cell is $PL$, the path loss when arriving at the neighboring eNodeBi is $PLi'$, the interference threshold of the neighboring eNodeBi is set as $Pi_{InterferenceTh}$, the number of the neighboring eNodeB is $i \leq N_{Neighbor}$, then it can be obtained that $P - PLi' \leq Pi_{InterferenceTh}$, if $i = 1, ..., N_{Neighbor}$, wherein $N_{Neighbor}$ indicates the number of the neighboring cells of the current serving cell,

thus it can be obtained that $P_{MAXfromInterference} = Min\{Pi_{InterferenceTh} + PLi'\}$, wherein $i = 1,..., N_{Neighbor}$.

Step 302, the eNodeB obtains the transmission power of a user on a unit RB.

Assumed that the maximum transmission power of the user is $P_{cMAX}$, the transmission power required to meet the highest rank MCS is $P_{highestMCS}$ and the transmission power of the user on the unit RB is $P_{perRB}$, then $P_{perRB}$ can be obtained by the following formula:

$$P_{perRB} = \min \left( P_{cMAX}, \quad P_{highestMCS}, \quad P_{MAXfromInterference} \right).$$

Step 303, the eNodeB obtains the maximum number $N_{RB\_MAX}$ of the RBs which can be allocated to the user in condition that the transmission power of the user on the unit RB is $P_{perRB}$, wherein

$$N_{RB\_MAX} = \left\lfloor \frac{P_{cMAX}}{P_{perRB}} \right\rfloor.$$

Step 304, the eNodeB estimates the SINR of the received signal, referred to as $SINR_{Estimate}$, according to the link quality and the measurement result of the path loss.

Assumed that the interference power on a unit RB is $P_{Inteiference}$, the noise power is $P_{Noise}$ and the path loss is PL, $SINR_{Estimate}$ can be obtained by the following formula:

$$SINR_{Estimate} = \frac{P_{perRB} - PL}{P_{Interference} + P_{Noise}}.$$

Step 305, the eNodeB uses the obtained estimation result of the SINR as the basis of AMC to obtain the current MCS of the user.

Step 306, the eNodeB determines the remaining power control parameters according to the transmission power of the user on the unit RB, the current MCS of the user, the pass loss and the relative high layer configuration parameters.

In the R8 of the LTE protocol, the remaining power control parameter is $f(i)$, wherein i refers to the sub-frame number, and

$$f(i) = P_{perRB}(i) - (P_{O\_PUSCH}(i) + \alpha \cdot PL + \Delta_{TF}(i))$$.

In the above formula, the $P_{O\_PUSCH}$ (i) and $\alpha$ have high layer configuration,

$$\Delta_{TF}(i) = \{ \begin{matrix} 10\log_{10}((2^{MPR \cdot K_s} - 1)\beta_{offset}^{PUSCH}), & \text{if} & Ks = 1.25 \\ 0 & & \text{if} \quad Ks = 0 \end{matrix}$$, wherein $\beta_{offset}^{PUSCH}$ and $K_s$ have high layer configuration, and

$MPR$ is the number of the information bits carried on the unit RE, which is determined by the MCS.

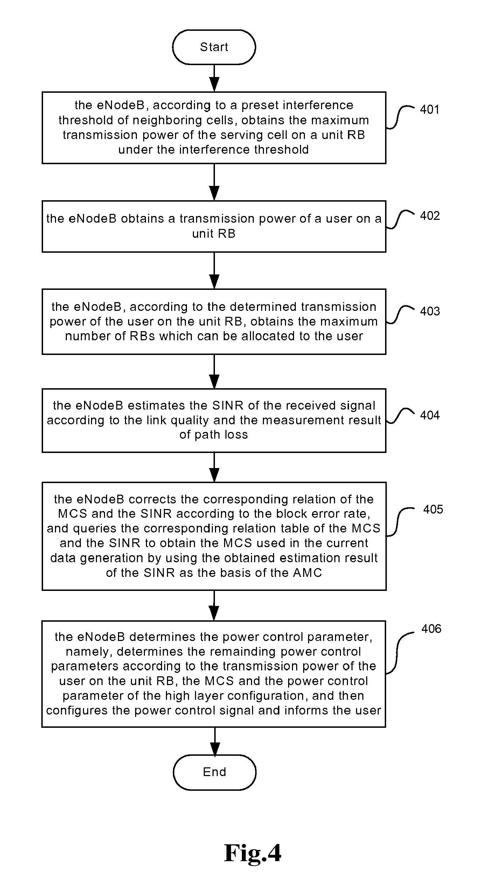

A method for coordinating the uplink RB allocation, the AMC and the power control parameter is provided in Example 2. As shown in Fig. 4, this method comprises the following steps.

Step 401, the eNodeB, according to a preset interference threshold of neighboring cells, obtains the maximum transmission power of the serving cell on a unit RB under the interference threshold, referred to as $P_{MAXfromInterference}$.

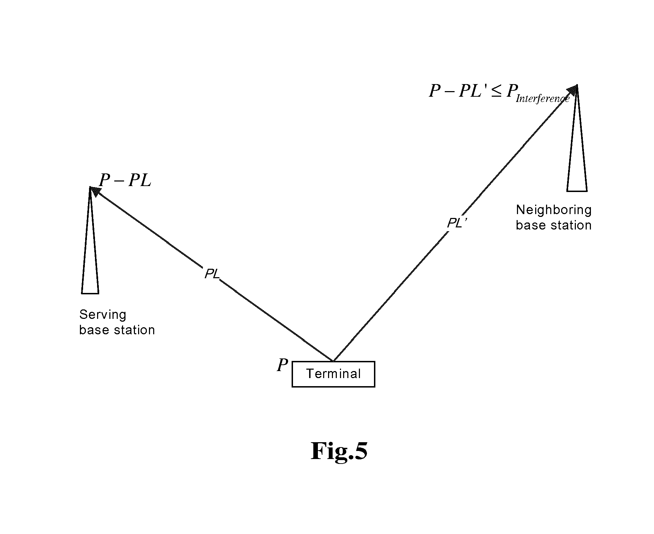

As shown in Fig. 5, in an example of the wireless network model in which the number of the neighboring cells is one, assumed that the signal transmission power of the serving cell is P, the path loss is $PL$, the path loss arriving at the eNodeB in the neighboring cell is $PL'$, the interference threshold of the neighboring cells is set to be $P_{InterferenceTh}$, then it can be obtained that $P - PL' \leq P_{InterferenceTh}$.

Thus it can be obtained *that* $P_{MAXfromInterference} = P_{InterferenceTh} + PL'$.

Step 402, the eNodeB obtains the transmission power of a user on a unit RB.

Assumed that the maximum transmission power of the user is $P_{cMAX}$, the transmission power required to meet the highest rank MCS is $P_{highestMCS}$ and the transmission power of the user on the unit RB is $P_{perRB}$, then $P_{perRB}$ can be obtained by the following formula:

$$P_{perRB} = \min\ (\ P_{cMAX}\ ,\ \ P_{highestMCS}\ ,\ \ P_{MAXfromInterference}\ )\ .$$

Step 403, the eNodeB obtains the maximum number $N_{RB\_MAX}$ of the RBs which can be allocated to the user in condition that the transmission power of the user on the unit RB is $P_{perRB}$, wherein:

$$N_{RB\_MAX} = \left\lfloor \frac{P_{cMAX}}{P_{perRB}} \right\rfloor .$$

Step 404, the eNodeB estimates the SINR of the received signal, referred to as $SINR_{Estimate}$, according to the link quality and the measurement result of path loss.

Assumed that the interference power on a unit RB is $P_{Interference}$, the noise power is $P_{Noise}$ and the path loss is $PL$, then $SINR_{Estimate}$ can be obtained by the following formula:

$$SINR_{Estimate} = \frac{P_{perRB} - PL}{P_{interference} + P_{Noise}} .$$

Step 405, the eNodeB performs the AMC process. In practice, the eNodeB may correct a corresponding relation of the MCS and the SINR according to the statistics of the BLER; the eNodeB queries the table of corresponding relation between the MCS and the SINR to obtain the MCS used in the current data generation by using the obtained estimation result of the SINR as the basis of the AMC.

Step 406, the eNodeB determines the power control parameter, namely, determines the remaining power control parameters according to the transmission power of the user on the unit RB, the MCS and the power control parameter of the high layer configuration, and then configures the power control signal and informs the user.

To sum up, the present invention, by coordinating the relations among the RB allocation, the AMC and the power control parameters, solves the problem of system performance decline caused by the improper coordination of the uplink RB allocation, the power control parameters and the AMC in the system, and ensures each user can control the theoretic interference level of neighboring cells, thus enabling the RB allocation, the power control parameter and the AMC to be combined and work together to maximize the system throughput.

Above description is only to illustrate the preferred embodiments but not to limit the scope of protection of the present invention. Any change, equivalent substitution or improvement made by those skilled in the art within the technical scope disclosed in the present invention should be covered in the scope of protection of the present invention. Therefore, the scope of protection of the present invention shall be determined by the scope defined in Claims.

**Claims**

1.  A method for resource allocation, **characterized by** comprising:

    a network side, according to a preset interference threshold of neighboring cells, determining a transmission power of a cell user on a unit Resource Block (RB), and then determining to obtain the maximum number of the RBs which can be allocated to the cell user according to the transmission power of the cell user on the unit RB; the network side, according to the link quality, the path loss condition and the transmission power of the cell user on the unit RB, obtaining a predicted value of the Signal Interface Noise Ratio (SINR) of the received signal, and then obtaining the current Modulation Code Scheme (MCS) of the cell user according to the predicted value of the SINR; and the network side determining a power control parameter according to the transmission power of the cell user on the unit RB and the current MCS of the cell user.

2.  The method for resource allocation according to Claim 1, **characterized in that** the step of the network side determining the transmission power of the cell user on the unit RB according to the preset interference threshold of neighboring cells comprises:

    the network side obtaining the maximum transmission power of a cell on a unit RB under the interference threshold of neighboring cells according to the preset interference threshold of neighboring cells, and then selecting the minimum value from the maximum transmission power of the cell on the unit RB, the power required to provide the highest MCS and the maximum transmission power of the cell user, as the transmission power of the cell user on the unit RB.

3.  The method for resource allocation according to Claim 1, **characterized in that** the step of the network side determining the power control parameter according to the transmission power of the cell user on the unit RB and the current MCS of the cell user comprises:

    the network side determining the power control parameter according to the obtained transmission power of the cell user on the unit RB, the current MCS of the cell user, a path loss and a high layer configuration parameter.

4.  The method for resource allocation according to Claim 1, **characterized in that** after the network side obtains the predicted value of the SINR, the method further comprises:

    the network side correcting a table of corresponding relation between the MCS and the SINR according to the statistics of block error rate.

5.  The method for resource allocation according to Claim 4, **characterized in that** the step of the network side obtaining the current MCS of the cell user according to the predicted value of the SINR comprises:

    the network side querying the table of corresponding relation between the MCS and the SINR to obtain the current MCS of the cell user by using the obtained predicted value of the SINR as the basis of the Automatic Modulation Code (AMC).

6.  A system for resource allocation, **characterized by** comprising: a module for determining the transmission power of a cell user on a unit RB, a module for determining the upper limit of the number of the RBs allocated to the cell user, an AMC module and a module for determining a power control parameter, wherein the module for determining the transmission power of a cell user on a unit RB is configured to determine a transmission power of a cell user on a unit RB according to a preset interference threshold of neighboring cells, and then to send the transmission power to the module for determining the upper limit of the number of the RBs allocated to the user, the module for determining a power control parameter and the AMC module; the module for determining the upper limit of the number of the RBs allocated to the user is configured to obtain the maximum number of the RBs which can be allocated to the cell user according to the determined transmission power of the cell user on the unit RB; the AMC module is configured to obtain a predicted value of the SINR of the received signal according to the link quality, the path loss condition and the transmission power of the cell user on the unit RB, and then to obtain the current MCS of the cell user according to the predicted value of the SINR and send the current MCS to the module for determining a power control parameter; and

the module for determining a power control parameter is configured to determine a power control parameter according to the transmission power of the cell user on the unit RB and the current MCS of the cell user.

7.  The system according to Claim 6, **characterized in that** the system further comprises:

    an initialization module configured to set initial variables, wherein the initial variables include at least one of the following: the interference threshold of neighboring cells, a table of corresponding relation between the MCS and the SINR, and a high layer configuration parameter.

8.  The system according to Claim 6, **characterized in that** the module for determining the transmission power of a user on a unit RB is further configured to obtain the maximum transmission power of a cell on a unit RB under the interference threshold of neighboring cells according to the preset interference threshold of neighboring cells, and then to select the minimum value among the maximum transmission power of the cell on the unit RB, the power required to provided the highest MCS and the maximum power of the user, as the transmission power of the cell user on the unit RB.

9.  The system according to Claim 7, **characterized in that** the AMC module is further configured to correct the table of corresponding relation between the MCS and the SINR according to the statistics results of block error rate, and then to query the table of corresponding relation between the MCS and the SINR to obtain the current MCS of the cell user according to the obtained predicted value of the SINR of the received signal.

10. The system according to Claim 7, **characterized in that** the module for determining a power control parameter is further configured to determine a power control parameter according to the transmission power of the cell user on the unit RB, the current MCS of the cell user, a path loss and the high layer configuration parameter.

Start

a network side, according to a preset interference
threshold OF neighboring cells, obtains the maximum
transmission power of the serving cell on a unit
Resource Block (RB) under the interference threshold — 110

the network side obtains a transmission power of a cell
user on a unit RB — 120

the network side obtains the maximum number of RBs
which can be allocated to the user according to the
determined transmission power of the user on the unit
RB — 130

the network side estimates the Signal Interface Noise
Ratio (SINR) of the received signal according to the link
quality and the measurement result of the path loss — 140

the network side obtains the current Modulation Code
Scheme (MCS) of the user according to the obtained
estimation result of the SINR — 150

the network side determines the remaining power
control parameters according to the transmission power
of the user on the unit RB, the current MCS of the user,
the pass loss and the relative high layer configuration
parameters — 160

End

**Fig.1**

**Fig.2**

Start

the eNodeB, according to a preset interference threshold of neighboring cells, obtains the maximum transmission power of the serving cell on a unit RB under the interference threshold — 301

the eNodeB obtains the transmission power of a user on a uit RB — 302

the eNodeB obtains the maximum number of RBs which can be allocated to the user according to the transmission power of the user on the unit RB — 303

the eNodeB estimates the Signal Interface Noise Ratio (SINR) of the received signal according to the link quality and the measurement result of the path loss — 304

the eNodeB uses the obtained estimation result of the SINR as the basis of AMC to obtain the current MCS of the user — 305

the eNodeB determines the remainding power control parameters according to the transmission power of the user on the unit RB, the current MCS of the user, the pass loss and the relative high layer configuration parameters — 306

End

**Fig.3**

Start

the eNodeB, according to a preset interference threshold of neighboring cells, obtains the maximum transmission power of the serving cell on a unit RB under the interference threshold — 401

the eNodeB obtains a transmission power of a user on a unit RB — 402

the eNodeB, according to the determined transmission power of the user on the unit RB, obtains the maximum number of RBs which can be allocated to the user — 403

the eNodeB estimates the SINR of the received signal according to the link quality and the measurement result of path loss — 404

the eNodeB corrects the corresponding relation of the MCS and the SINR according to the block error rate, and queries the corresponding relation table of the MCS and the SINR to obtain the MCS used in the current data generation by using the obtained estimation result of the SINR as the basis of the AMC — 405

the eNodeB determines the power control parameter, namely, determines the remainding power control parameters according to the transmission power of the user on the unit RB, the MCS and the power control parameter of the high layer configuration, and then configures the power control signal and informs the user — 406

End

**Fig.4**

$$P - PL' \leq P_{Interference}$$

$$P - PL$$

PL'

Neighboring
base station

PL

Serving
base station

$P$ | Terminal |

**Fig.5**

# INTERNATIONAL SEARCH REPORT

| | International application No. |
|---|---|
| | PCT/CN2010/074346 |

**A. CLASSIFICATION OF SUBJECT MATTER**

H04W72/08 (2009.01) i

According to International Patent Classification (IPC) or to both national classification and IPC

**B. FIELDS SEARCHED**

Minimum documentation searched (classification system followed by classification symbols)

IPC:H04Q;H04L;H04M;G06F;H04W

Documentation searched other than minimum documentation to the extent that such documents are included in the fields searched

Electronic data base consulted during the international search (name of data base and, where practicable, search terms used)

WPI;EPODOC;CNKI;CNPAT;3GPP: resource, allocat+, assign+, resource block?, RB?, number, amount, magnitude, quantity, maximum, power, modulation, cod+, MCS, power control, TPC, parameter, SINR, signal interference noise ratio, SNR, CINR, carrier interference noise ratio, AMC, automatic modulation code, BLER, block error rate

**C. DOCUMENTS CONSIDERED TO BE RELEVANT**

| Category* | Citation of document, with indication, where appropriate, of the relevant passages | Relevant to claim No. |
|---|---|---|
| PX | CN 101711058 A (ZTE CORP.) 19 May 2010 (19.05.2010) description pages 3-6 | 1-10 |
| Y | US 2008/0233992 A1 (FREESCALE SEMICONDUCTOR, INC.) 25 Sep. 2008 (25.09.2008) description paragraphs 25, 29, 32, 42, 49 and 50 | 1-3, 6-8, 10 |
| A | | 4, 5, 9 |
| Y | CN 101141157 A (HUAWEI TECHNOLOGY CO., LTD.) 12 Mar.2008 (12.03.2008) description page 8 paragraph 3 | 1-3, 6-8, 10 |
| A | | 4, 5, 9 |

☒ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 12 Jul. 2010(12.07.2010) | **30 Sep. 2010 (30.09.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer YI,Shuiying Telephone No. (86-10)62413381 |
|---|---|

Form PCT/ISA /210 (second sheet) (July 2009)

## INTERNATIONAL SEARCH REPORT

| International application No. |
|---|
| PCT/CN2010/074346 |

C (Continuation).     DOCUMENTS CONSIDERED TO BE RELEVANT

| Category* | Citation of document, with indication, where appropriate, of the relevant passages | Relevant to claim No. |
|---|---|---|
| A | CN 101557246 A   (CHINA MOBILE COMMUNICATIONS CORP.) 14 Oct.2009 (14.10.2009) the full document | 1-10 |

Form PCT/ISA /210 (continuation of second sheet ) (July 2009)

## INTERNATIONAL SEARCH REPORT
### Information on patent family members

International application No.

PCT/CN2010/074346

| Patent Documents referred in the Report | Publication Date | Patent Family | Publication Date |
|---|---|---|---|
| CN 101711058 A | 19.05.2010 | None | |
| US 2008/0233992 A1 | 25.09.2008 | WO 2008115660 A1 | 25.09.2008 |
| | | EP 2137994 A1 | 30.12.2009 |
| | | CN 101637056 A | 27.01.2010 |
| | | KR 20100014715 A | 10.02.2010 |
| CN 101141157 A | 12.03.2008 | None | |
| CN 101557246 A | 14.10.2009 | WO 2009124459 A1 | 15.10.2009 |

Form PCT/ISA /210 (patent family annex) (July 2009)